# EUROPEAN PATENT SPECIFICATION

(11) **EP 2 653 308 B1**
(45) Date of publication and mention of the grant of the patent: **30.01.2019**
(21) Application number: 11849573.8
(22) Date of filing: 01.12.2011
(51) Int. Cl.: B32B 27/30, B32B 25/08, B32B 7/04, B32B 25/00, B32B 25/04, B32B 25/14, B32B 25/16, B32B 27/00, B32B 27/06, B32B 27/18, B32B 27/26, B32B 27/32, B32B 1/08, C08K 5/00

(54) **LAMINATE**
LAMINAT
STRATIFIÉ

(30) Priority: 15.12.2010 JP 2010279423
(43) Date of publication of application: 23.10.2013
(73) Proprietor: Daikin Industries, Ltd., Osaka 530-8323 (JP)
(72) Inventor: MASUI, Toshiaki, Osaka-shi, Osaka 530-8323 (JP); KUWAJIMA, Yuuki, Osaka-shi, Osaka 530-8323 (JP); ONO, Tsuyoshi, Osaka-shi, Osaka 530-8323 (JP); INABA, Takeshi, Osaka-shi, Osaka 530-8323 (JP)
(74) Representative: Hoffmann Eitle
(86) International application number: PCT/JP2011/077821
(87) International publication number: WO 2012/081413

(56) References cited:
- EP-A1- 1 704 994
- WO-A1-2009/020182
- WO-A1-2009/020182
- JP-A- 56 053 066
- JP-A- 2007 261 079
- JP-A- 2008 265 273
- US-A- 6 106 914
- US-A1- 2007 231 522
- US-A1- 2007 248 779

## Description

### TECHNICAL FIELD

The present invention relates to a laminate.

### BACKGROUND ART

Conventionally, with increasing environmental awareness, fuels with alcohol have been used in the automobile industry. This results in increased diversity of fuels and increased needs for materials having good chemical resistance. Also, since such fuels are sometimes used in higher temperatures than conventional fuels, materials having thermal resistance as well as chemical resistance are demanded.

As hoses for fuel transfer, one with excellent flexibility is demanded, from the viewpoint of good vibration absorption. In order to meet these required characteristics, laminates that have a fluororesin layer and a rubber layer have been proposed. However, the fluororesin layer and the rubber layer are not easily adhered to each other.

As a method for enhancing the interfacial adhesion between a fluororesin layer and a rubber layer, use of epoxidized rubber or a blended material containing epoxidized rubber and another rubber in a rubber layer is known (Patent Literature 1).

Also, another known method for direct adhesion of a rubber to a fluororesin is using a thermoplastic fluororesin having a reactive functional group (e.g. a carbonyl group) and adding a polyfunctional compound such as triallyl isocyanurate to at least one of the thermoplastic fluororesin and a rubber layer (Patent Literature 2).

A fuel hose having a layered structure in which a diene rubber layer and a vinylidene fluoride copolymer (THV) layer are adjacent to each other is also known. The diene rubber layer comprises a diene rubber (e.g. NBR) mixed with a sulfur vulcanizing agent, at least one of a metal calbamate and a thiazole metal salt, and magnesium oxide, along with a DBU salt and the like (Patent Literature 3).

It is also known that adhesiveness of a curable elastomeric compound to a fluoropolymer layer is enhanced by using a fluoropolymer essentially containing a vinylidene fluoride unit and blending a dehydrofluorinating composition with the curable elastomer (Patent Literature 4).

It is also known that a fluoropolymer containing a copolymer derived from copolymer units containing hexafluoropropylene, tetrafluoroethylene, and ethylene can be bonded with a curable elastomer by blending a dehydrofluorinating composition with the curable elastomer (Patent Literature 5).

### CITATION LIST

### PATENT LITERATURE

Patent Literature 1 JP H7-266501 A
Patent Literature 2 JP 2005-22403 A
Patent Literature 3 JP 2007-261079 A
Patent Literature 4 JP 2001-526972 T
Patent Literature 5 JP 2001-527104 T

WO2009020182A1 discloses a laminate made from a thermoplastic resin layer made from a blend of a fluororesin and a crosslinked fluororubber, and an elastomer layer formed from an elastomer composition, possibly an acrylonitrile-butadiene rubber.

### SUMMARY OF THE INVENTION

### PROBLEMS TO BE SOLVED BY THE INVENTION

The vinylidene fluoride copolymer (THV) and the fluoropolymer essentially containing vinylidene fluoride are poor in resistance to bases or amines. Therefore, the techniques disclosed in Patent Literatures 3 and 4 have difficulty in providing a laminate excellent in chemical resistance.

In the case of the method disclosed in Patent Literature 5, only low-melting-point fluororesins can be used, and adhesion of a fluororesin having good thermal resistance to a rubber is not achieved. The method thereby still has room to be improved.

The present invention is aimed to provide a laminate which is excellent in chemical resistance and in which a rubber layer and a fluororesin layer with excellent thermal resistance are firmly adhered to each other without using an adhesive or performing a surface treatment on the rubber layer and the fluororesin layer.

### MEANS FOR SOLVING THE PROBLEMS

The present inventors noticed that a laminate containing a rubber and a fluoropolymer (ETFE) having a polymer unit derived from ethylene and a polymer unit derived from tetrafluoroethylene as a fluororesin had an improved chemical resistance. Further, they have found out that ETFE with high melting point is firmly adhered to a rubber, if the ETFE contains a polymer unit derived from tetrafluoroethylene in a specific ratio. Thus, the present inventors completed the present invention.

Namely, the present invention relates to a laminate including a rubber layer (A) and a fluororesin layer (B) on the rubber layer (A), wherein the rubber layer (A) is a layer formed of a rubber composition for vulcanization, the rubber composition for vulcanization contains an unvulcanized rubber (a1); at least one compound (a2) selected from the group consisting of 1,8-diazabicyclo(5.4.0)undec-7-ene salts, 1,5-diazabicyclo(4.3.0)-non-5-ene salts, 1,8-diazabicyclo(5.4.0)undec-7-ene, and 1,5-diazabicyclo(4.3.0)-non-5-ene; magnesium oxide (a3); and silica (a4), the amount of the compound (a2) is more than 1.0 part by mass and not more than 5.0 parts by mass, for each 100 parts by mass of the unvulcanized rubber (a1), the fluororesin layer (B) is a layer formed of a fluoropolymer composition, the fluoropolymer composition contains a fluoropolymer (b1) having a polymer unit derived from ethylene and a polymer unit derived from tetrafluoroethylene, and the fluoropolymer (b1) contains 60 mol% or more of the polymer unit derived from tetrafluoroethylene and has a melting point of 200°C or higher.

The rubber composition for vulcanization preferably further contains at least one vulcanizing agent (a5) selected from the group consisting of sulfur vulcanizing agents and peroxide vulcanizing agents.

The rubber composition for vulcanization preferably further contains at least one metal salt (a6) selected from the group consisting of metal carbamates and thiazole metal salts.

The unvulcanized rubber (a1) is preferably a fluorine-free rubber.

The unvulcanized rubber (a1) is preferably acrylonitrile-butadiene rubber.

The compound (a2) is preferably at least one compound selected from the group consisting of 1,8-diazabicyclo(5.4.0)undec-7-ene, 1,8-benzyl-1,8-diazabicyclo(5.4.0)-7-undecenium chloride, 1,8-diazabicyclo(5.4.0)undec-7-ene naphthoate, 1,8-diazabicyclo(5.4.0)undec-7-ene phenoxide, 1,8-diazabicyclo(5.4.0)undec-7-ene orthophthalate, and 1,8-diazabicyclo(5.4.0)undec-7-ene formate.

The fluoropolymer (b1) is preferably a copolymer containing a polymer unit derived from ethylene, a polymer unit derived from tetrafluoroethylene, and a polymer unit derived from a fluorine-containing vinyl monomer (e). The fluorine-containing vinyl monomer (e) is a monomer represented by the formula (5):

CH₂=CF-(CF₂)ₙ-X² (5)

wherein X² is H or F; and n is an integer from 1 to 10.
The total of the polymer unit derived from ethylene and the polymer unit derived from tetrafluoroethylene in the fluoropolymer (b1) is preferably 90 to 99.9 mol% for the total of the polymer units.

In the laminate of the present invention, the rubber layers (A) are preferably laminated on both faces of the fluororesin layer (B).

In the laminate of the present invention, the fluororesin layers (B) are preferably laminated on both faces of the rubber layer (A).

The laminate of the present invention preferably further contains a polymer layer (C) other than the rubber layer (A) and the fluororesin layer (B), on the rubber layer (A) or the fluororesin layer (B).

The laminate of the present invention is preferably a laminate obtained by vulcanizing the laminate described above and in which a vulcanized rubber layer (A1) and a fluororesin layer (B) is adhered by vulcanization,
the vulcanized rubber (A1) being obtained by vulcanization.

### EFFECT OF THE INVENTION

Since the laminate of the present invention has the structure in which a fluororesin layer and a rubber layer are laminated as described above, chemically-firm adhesion is obtained during vulcanization of the rubber. Therefore, special procedures for adhering are not needed. This allows easy forming at low cost, and excellent chemical resistance and excellent thermal resistance can be achieved. In addition, since a common forming method such as extrusion can be employed, thinner products can be produced so that the flexibility is improved.

### MODES FOR CARRYING OUT THE INVENTION

The laminate of the present invention includes a rubber layer (A) and a fluororesin layer (B) on the rubber layer (A).

In the following, the layers are described.

First, the fluororesin layer (B) in the laminate of the present invention is described.

### (B) Fluororesin layer

The fluororesin layer (B) is formed of a fluoropolymer composition.

The fluoropolymer composition contains a fluoropolymer (b1) containing at least a polymer unit derived from ethylene and a polymer unit derived from tetrafluoroethylene (TFE). Since the fluororesin layer (B) is formed of the fluoropolymer composition containing the fluoropolymer (b1), the laminate of the present invention is excellent in chemical resistance. This excellent chemical resistance makes the laminate of the present invention useful for various fuels, which have increasingly diversified in recent years.

The fluoropolymer (b1) contains 60 mol% or more of the polymer unit derived from tetrafluoroethylene (hereinafter, also referred to as "TFE unit") for the total of the polymer units and has a melting point of 200°C or higher. Conventionally, it was impossible to firmly adhere a rubber to polyvinylidene difluoride (PVdF) or a fluoropolymer that has excellent thermal resistance and contains a polymer unit derived from ethylene and a polymer unit derived from tetrafluoroethylene (e.g. one having a melting point of 200°C or higher). In the laminate of the present invention, since the fluoropolymer composition contains the fluoropolymer (b1) containing 60 mol% or more of the TFE unit, firm adhesion of the fluororesin layer (B) and the rubber layer (A) is achieved, even though the fluoropolymer (b1) has a melting point of 200°C or higher. Also, since the fluoropolymer has the composition described above, the laminate of the present invention has excellent chemical resistance.

The fluoropolymer (b1) preferably contains 62 mol% or more, and more preferably 63 mol% or more of the TFE units for total of the polymer units. The fluororubber (b1) also preferably contains 67 mol% or less, and more preferably 66 mol% or less of the TFE unit.

The fluoropolymer (b1) has a melting point of 200°C or higher, and more preferably 210°C or higher. The melting point is preferably 260°C or lower, more preferably 250°C or lower, and further preferably 240°C or lower.

The melting point of the fluoropolymer (b1) is a temperature corresponding to the maximum value of the fusion heat curve recorded during heating at a rate of 10°C/minute using a differential scanning calorimeter (DSC).

The fluoropolymer (b1) also preferably contains a polymer unit derived from a monomer copolymerizable with ethylene and TFE. The monomer compolymerizable with ethylene and TFE is preferably at least one fluorine-containing vinyl monomer (d) selected from the group consisting of monomers represented by the formula (1):

CH₂=CX¹R^{f1} (1)

, monomers represented by the formula (2):

CF₂=CFR^{f1} (2)

, monomers represented by the formula (3):

CF₂=CFOR^{f1} (3)

, and monomers represented by the formula (4):

CH₂=C(R^{f1})₂ (4)

. In the formulae (1) to (4), X¹ is H or F and R^{f1} represents a fluoroalkyl group that may contain an ethereal oxygen atom. R^{f1} is preferably a C1 to C8 fluoroalkyl group that may contain an ethereal oxygen atom, further preferably a C1 to C6 fluoroalkyl group, and especially preferably a C1 to C4 fluoroalkyl group.

Specific examples of the fluorine-containing vinyl monomer (d) represented by any of the formulae (1) to (4) include 1,1-dihydroperfluoropropene-1,1,1-dihydroperfluorobutene-1, perfluoro(1,1,5-trihydro-1-pentene), 1,1,7-trihydroperfluoroheptene-1, 1,1,2-trihydroperfluorohexene-1, 1,1,2-trihydroperfluorooctene-1, 2,2,3,3,4,4,5,5-octafluoropentyl vinyl ether, perfluoro(methyl vinyl ether), perfluoro(propyl vinyl ether), hexafluoropropene, perfluorobutene-1, and 3,3,3-trifluoro-2-(trifluoromethyl)propene-1.

The monomer copolymerizable with ethylene and TFE is especially preferably a fluorine-containing vinyl monomer (e) represented by the formula (5):

CH₂=CF-(CF₂)ₙ-X² (5)

(wherein X² is H or F and n is an integer from 1 to 10). The n is more preferably an integer from 1 to 3. The monomer copolymerizable with ethylene and TFE is more preferably at least one fluorine-containing vinyl monomer selected from the group consisting of perfluoro(1,1,5-trihydro-1-pentene) and 1,1-dihydroperfluoropropene-1.

The fluoropolymer (b1) is preferably at least one polymer selected from the group consisting of ethylene/TFE copolymers and ethylene/TFE/fluorine-containing vinyl monomer (d) copolymers.

The fluoropolymer (b1) is preferably an ethylene/tetrafluoroethylene/(a fluorine-containing vinyl monomer represented by the formula (1)) copolymer, and more preferably an ethylene/tetrafluoroethylene/the fluorine-containing vinyl monomer (e) copolymer. Here, in the present description, "ethylene/tetrafluoroethylene/the fluorine-containing vinyl monomer (e) copolymer" denotes a copolymer that contains a polymer unit derived from ethylene, a polymer unit derived from TFE, and a polymer unit derived from the fluorine-containing vinyl monomer (e).

In the fluoropolymer (b1), the total of the polymer unit derived from ethylene and the polymer unit derived from TFE is preferably 90 to 99.9 mol%, more preferably 95 to 99.9 mol%, and further preferably 96 to 99.8 mol%, for the total of the polymer units.

In the fluoropolymer (b1), the amount of the polymer unit derived from a monomer copolymerizable with ethylene and TFE is preferably 0.1 to 10 mol%, more preferably 0.1 to 5 mol%, and especially preferably 0.2 to 4 mol%.

If the fluoropolymer (b1) contains a polymer unit derived from a monomer copolymerizable with ethylene and TFE, the amount of the ethylene unit is preferably 30 to 39.9 mol%, and more preferably 36 to 39.8 mol% for the total of the polymer units.

The fluoropolymer (b1) may have at least one reactive functional group selected from the group consisting of a carbonyl group, a hydroxyl group, a heterocyclic group, and an amino group, at a main chain terminal and/or a side chain of the polymer.

In the present description, "a carbonyl group" is a divalent carbon group constituted by a carbon-oxygen double bond and is exemplified by a group represented by -C(=O)-. The reactive functional group such as the carbonyl group is not particularly limited, and examples thereof include a group containing a carbonyl group as a part of the chemical structure, such as a carbonate group, a carboxylic halide group (halogenoformyl group), a formyl group, a carboxyl group, an ester bond (-C(=O)O-), an acid anhydride bond (-C(=O)O-C(=O)-), an isocyanate group, an amide group, an imide group (-C(=O)-NH-C(=O)-), an urethane bond (-NH-C(=O)O-), a carbamoyl group (NH₂-C(=O)-), a carbamoyloxy group (NH₂-C(=O)O-), an ureide group (NH₂-C(=O)-NH-), and an oxamoyl group (NH₂-C(=O)-C(=O)-).

In a group such as an amide group, an imide group, a urethane bond, a carbamoyl group, a carbamoyloxy group, an ureide group, and an oxamoyl group, a hydrogen atom bonded to a nitrogen atom may be substituted by a hydrocarbon group such as an alkyl group.

The fluoropolymer (b1) may be a polymer having a reactive functional group at either a main chain terminal or a side chain, or a polymer having a reactive functional group at both a main chain terminal and a side chain. In the case where the main chain is terminated with the reactive functional group, both terminals of the main chain may have the reactive functional groups or only one terminal may have the reactive functional group. In the case where the reactive functional group has an ether bond, the reactive functional group may be additionally contained in the main chain.

The fluoropolymer (b1) is preferably a polymer having a reactive functional group at a main chain terminal, because a significant loss of the mechanical properties and chemical resistance can be avoided and because it is advantageous in terms of productivity and cost.

The fluoropolymer (b1) may have a heterocyclic group or amino group at a main chain terminal or a side chain terminal of the polymer.

The heterocyclic group has a hetero ring including a hetero atom (e.g. nitrogen atom, sulfur atom, oxygen atom). The ring may be a saturated ring or unsaturated ring, and may be a monocycle or fused ring. Especially, the heterocyclic group is preferably an oxazolyl group.

The amino group is a monovalent functional group obtained by removing hydrogen from ammonium, or a primary or secondary amine. Specifically, the amino group is represented by a formula: -NR⁴R⁵ (in the formula, R⁴ and R⁵ being the same as or different from each other and each representing a hydrogen atom or a C1-C20 monovalent organic group). Specific examples of the amino group include -NH₂, -NH(CH₃), -N(CH₃)₂, -NH(CH₂CH₃), -N(C₂H₅)₂, and -NH(C₆H₅).

The molecular mass of the fluoropolymer (b1) is preferably within a range that allows a molded product having fine chemical properties, mechanical properties and lower fuel permeability to be obtained. For example, if the melt flow rate (MFR) is set as an index of the molecular mass, the MFR of the fluoropolymer is preferably 0.5 to 100 g/10 minutes, and more preferably 10 to 50 g/10 minutes.

The MFR is obtained with use of a melt indexer (product of TOYO SEIKI SEISAKU-SHO, LTD.) by measuring the weight (g) of the polymer exiting from the nozzle having a diameter of 2 mm and a length of 8 mm in a unit time (10 minutes) under a load of 5 kg at 297°C.

The fluoropolymer (b1) is obtainable by a conventionally known polymerization method such as suspension polymerization, solution polymerization, emulsion polymerization, and bulk polymerization. In the polymerization, various conditions such as temperature and pressure, and the polymerization initiator and other additives may be appropriately determined in accordance with the composition or the amount of the fluoropolymer (b1).

The fluororesin layer (B) of the present invention may contain one of these fluoropolymers (b1), or may contain two or more of these fluoropolymers (b1). The amount of the fluoropolymer (b1) is preferably 20% by mass or more, more preferably 40% by mass or more, and further preferably 50% by mass or more for the fluororesin polymer composition.

In one preferable embodiment, the fluororesin polymer composition contains a fluororubber.

The fluororubber is not particularly limited, and examples thereof include peroxide-crosslinkable fluororubbers, polyol-crosslinkable fluororubbers, and polyamine-crosslinkable fluororubbers.

The peroxide-crosslinkable fluororubber is not particularly limited as long as it contains a peroxide-crosslinkable portion. The peroxide-crosslinkable portion is not particularly limited, and examples thereof include an iodine atom and a bromine atom.

The polyol-crosslinkable fluororubber is not particularly limited as long as it contains a polyol-crosslinkable portion. The polyol-crosslinkable portion is not particularly limited, and examples thereof include a potion having a vinylidene fluoride (VdF) unit.

The crosslinkable portion may be introduced by, for example, copolymerizing a monomer that provides a crosslinkable portion during polymerization of the fluororubber.

Examples of the fluororubber include vinylidene fluoride (VdF)/hexafluoropropylene (HFP) fluororubbers, VdF/HFP/tetrafluoroethylene (TFE) fluororubbers, TFE/propylene fluororubbers, TFE/propylene/VdF fluororubbers, ethylene/HFP fluororubbers, ethylene/HFP/VdF fluororubbers, ethylene/HFP/TFE fluororubbers, VdF/TFE/perfluoro alkyl vinyl ether (PAVE) fluororubbers, and VdF/CTFE fluororubbers.

The fluororubber is preferably a VdF fluororubber containing a VdF unit, and more preferably at least one selected from the group consisting of VdF/HFP fluororubbers and VdF/TFE/HFP fluororubbers, in terms of thermal resistance, compression set, productivity, and cost. The fluororubber is further preferably a VdF/TFE/HFP fluororubber. One or two or more of the fluororubbers described above may be used.

The fluororubber preferably has a fluorine content of 64% by mass or more, and more preferably 66% by mass or more. The upper limit of the fluorine content is not particularly limited, but is preferably 74% by mass or less. If the fluorine content in the fluororubber is less than 64% by mass, chemical resistance, fuel barrier properties, and fuel permeability resistance tend to be poor.

The fluororubber may be a cross-linked fluororubber obtained by dynamic cross-linking of an un-cross-linked fluororubber in the presence of the fluoropolymer (b1) and a crosslinking agent under melt conditions. Such a dynamically cross-linked fluororubber is preferred because it enhances flexibility of the fluororesin layer (B) formed of the fluororesin polymer composition.

Here, "dynamic cross-linking" means dynamically cross-linking an un-cross-linked fluororubber using a banbury mixer, pressure kneader, an extruder, or the like while kneading it in the molten state. Extruders such as twin screw extruders are preferably used because these can apply high shear. By dynamic cross-linking, the phase structure of the fluoropolymer (b1) and the cross-linked fluororubber can be controlled.

Also, "under melt conditions" means that the cross-linking is performed at a temperature higher than a temperature at which fluororesins melt. The preferred temperature range differs according to the melting point of the fluoropolymer (b1) or the glass transition temperature of the un-cross-linked fluororubber, and is preferably 120°C to 330°C, and more preferably 130°C to 320°C. If the temperature is lower than 120°C, dispersion of the fluororubber in the fluoropolymer (b1) tends to be coarse. If the temperature is higher than 330°C, the fluororubber tends to be deteriorated by heat.

The resulting fluoropolymer composition may have a structure in which the fluoropolymer (b1) forms a continuous phase and the cross-linked fluororubber forms a discontinuous phase, or may have a structure in which the fluoropolymer (b1) and the cross-linked rubber form a bicontinuous phase. Preferred among these is a structure in which the fluororesin forms a continuous phase and the cross-linked fluororubber forms a discontinuous phase.

Even if the un-cross-linked fluororubber is dispersed to form a matrix, with progress of the cross-linking reaction, the un-cross-linked rubber turns into a cross-linked fluororubber having increased melt viscosity, and thereby forms a discontinuous phase or a bicontinuous structure with the fluororesin.

Also, the fluoropolymer composition may contain a bicontinuous structure of the fluoropolymer (b1) and the cross-linked fluororubber (b1) as a part of the structure in which the fluoropolymer (b1) forms a continuous phase and the cross-linked fluororubber forms a discontinuous phase.

In the case that such a structure is formed, the fluororesin layer (B) having more favorable chemical resistance, thermal resistance, fuel-barrier properties, and oil resistance can be obtained. The average dispersed particle size of the cross-linked fluororubber is preferably 0.01 to 30 µm, more preferably 0.1 to 20 µm, and further preferably 0.1 to 10 µm. If the average dispersed particle size is smaller than 0.01 µm, fluidity tends to be reduced. If the average dispersed particle size is larger than 30 µm, a molded product tends to have reduced strength.

If the fluoropolymer composition contains a fluororubber, the mass ratio of the fluororubber to the fluororesin in the fluoropolymer composition is preferably 3/97 to 90/10 (fluororubber/fluororesin). If the mass ratio of the fluororesin is lower than 90/10 (fluororubber/fluororesin), enhancing effects for fuel permeability and resistance to embrittlement at low temperatures may be reduced. In terms of balanced improvement of fuel permeability, resistance to embrittlement at low temperatures, and rubber elasticity, the mass ratio is preferably 5/95 to 70/30 (fluororubber/fluororesin), and more preferably 10/90 to 50/50.

In accordance with purposes and applications, the fluororesin layer (B) may further contain various fillers such as inorganic powder, glass fibers, carbon powder, carbon fibers, and metal oxides, as far as they do not impair the performance.

For example, with an aim of further lowering the fuel permeability, the fluororesin layer (B) may contain smectite layered clay minerals, such as montmorillonite, beidellite, saponite, nontronite, hectorite, sauconite, and stevensite, and/or fine layered minerals having high aspect ratio such as mica.

With an aim of providing conductivity, conductive filler may be added. The conductive filler is not particularly limited, and examples thereof include a powdery or fibrous conductive elementary substance such as metals and carbons, powder of conductive compounds such as zinc oxide, and powder provided with electric conductivity by a surface treatment. In the case where conductive filler is added, the fluoropolymer composition is preferably melted and compounded and formed into a pellet in advance.

The powdery or fibrous conductive elementary substance is not particularly limited, and examples thereof include: metal powders of copper and nickel; metal fibers of iron and stainless steel; carbon black, carbon fibers, and carbon fibrils disclosed in JP-A 3-174018.

The powder provided with electric conductivity by a surface treatment is a powder obtained by conducting treatment for imparting the conductivity to the surface of a nonconductive powder such as glass beads and titanium oxide.

The method of imparting the conductivity to the surface is not particularly limited, and may be metal sputtering, electroless deposition, or the like.

Carbon black, among the conductive fillers, is favorably used because it is advantageous in terms of the economic efficiency and prevention of static charge buildup.

The volume resistivity of the fluoropolymer composition containing a conductive filler is preferably 1 × 10° to 1 × 10⁹ Ω·cm. More preferably, the lower limit is 1 × 10² Ω·cm and the upper limit is 1 × 10⁸ Ω·cm.

In addition to the fillers, optional additives such as heat stabilizers, stiffeners, UV absorbents, and pigments may be added.

### (A) Rubber layer

The rubber layer (A) is formed of a rubber composition for vulcanization.

The rubber composition for vulcanization contains, as essential components, an unvulcanized rubber (a1), a compound (a2), magnesium oxide (a3), and silica (a4). Since the rubber layer (A) has the composition, a laminate in which the layer (A) and the layer (B) are firmly adhered to each other can be obtained.

The rubber composition for vulcanization may further contain, as optional components, at least one of a vulcanizing agent (a5) and a metal salt (a6). Especially in the case that the rubber composition for vulcanization contains, in addition to the unvulcanized rubber (a1) and the compound (a2), the vulcanizing agent (a5) and the metal salt (a6), the layer (A) and the layer (B) can be adhered to each other more strongly.

The amount of the unvulcanized rubber (a1) is preferably 20% by mass or more, more preferably 30% by mass or more, and further preferably 40% by mass or more for the rubber composition for vulcanization. Though the unvulcanized rubber (a1) may be a fluororubber, the unvulcanized rubber (a1) is preferably a fluorine-free rubber because it is excellent in cold resistance and cost effective.

Specific examples of the fluorine-free rubber include diene rubbers such as acrylonitrile-butadiene rubber (NBR) and its hydride (HNBR), styrene-butadiene rubber (SBR), chloroprene rubber (CR), butadiene rubber (BR), natural rubber (NR), and isoprene rubber (IR); ethylene-propylene-termonomer copolymer rubber, silicone rubber, butyl rubber, epichlorohydrin rubber, and acrylic rubbers.

The unvulcanized rubber (a1) is preferably a diene rubber and is more preferably NBR or its hydride (HNBR) because of its fine thermal resistance, oil resistance, weather resistance, and extrudability.

The rubber composition for vulcanization may contain a resin for providing the rubber layer (A) with another property other than the property given by the unvulcanized rubber (a1). Examples of the resin include polyvinyl chloride (PVC), chlorinated polystyrene, chlorosulfonated polystyrene-ethylene, and ethylene-vinyl acetate copolymers. In the case that the rubber composition for vulcanization contains NBR and PVC, for example, the ozone resistance can be enhanced. In such a case, the amount of PVC is preferably 10 to 70 parts by mass for each 100 parts by mass of NBR.

The compound (a2) is at least one compound selected from the group consisting of a 1,8-diazabicyclo(5.4.0)undec-7-ene salt (DBU salt), a 1,5-diazabicyclo(4.3.0)-non-5-ene salt (DBN salt), 1,8-diazabicyclo(5.4.0)undec-7-ene (DBU), and 1,5-diazabicyclo(4.3.0)-non-5-ene (DBN). The compound (a2) improves the vulcanization property of the rubber composition for vulcanization.

Examples of the DBU salt and the DBN salt include a carbonate, a long chain aliphatic carboxylate, an aromatic carboxylate, an orthophthalate, a p-toluenesulfonate, a phenoxide, a phenol resin salt, a naphthoate, an octoate, an oleate, a formate, and a phenolic novolac resin salt of DBU and DBN. The DBU or DBN salt is preferably at least one compound selected from the group consisting of 1,8-benzyl-1,8-diazabicyclo(5.4.0)-7-undecenium chloride (DBU-B), a naphthoate, an orthophthalate, a phenoxide, and a formate.

More specifically, the compound (a2) is preferably at least one compound selected from the group consisting of 1,8-diazabicyclo(5.4.0)undec-7-ene, 1,8-benzyl-1,8-diazabicyclo(5.4.0)-7-undecenium chloride, 1,8-diazabicyclo(5.4.0)undec-7-ene naphthoate, 1,8-diazabicyclo(5.4.0)undec-7-ene phenoxide, 1,8-diazabicyclo(5.4.0)undec-7-ene orthophthalate, and 1,8-diazabicyclo(5.4.0)undec-7-ene formate.

The compound (a2) is more preferably at least one compound selected from the group consisting of 1,8-diazabicyclo(5.4.0)undec-7-ene, 1,8-benzyl-1,8-diazabicyclo(5.4.0)-7-undecenium chloride, 1,8-diazabicyclo(5.4.0)undec-7-ene phenoxide, 1,8-diazabicyclo(5.4.0)undec-7-ene orthophthalate, and 1,8-diazabicyclo(5.4.0)undec-7-ene formate. Moreover, the compound (a2) is still more preferably at least one compound selected from the group consisting of 1,8-benzyl-1,8-diazabicyclo(5.4.0)-7-undecenium chloride and 1,8-diazabicyclo(5.4.0)undec-7-ene formate. The compound (a2) is especially preferably 1,8-diazabicyclo(5.4.0)undec-7-ene formate.

In another preferable embodiment, the compound (a2) is a combination of 1,8-diazabicyclo(5.4.0)undec-7-ene and 1,8-diazabicyclo(5.4.0)-undec-7-ene naphthoate. In another preferable embodiment, the compound (a2) is a combination of 1,8-benzyl-1,8-diazabicyclo(5.4.0)-7-undecenium chloride and 1,8-diazabicyclo(5.4.0)-undec-7-ene naphthoate.

The amount of the compound (a2) is more than 1.0 part by mass and not more than 5.0 parts by mass for each 100 parts by mass of the unvulcanized rubber (a1). The amount of the compound (a2) is preferably 1.5 parts by mass or more for each 100 parts by mass of the unvulcanized rubber (a1). If the amount is too small, the adhesion force may be insufficient. The amount of the compound (a2) is preferably 4.0 parts by mass or less, more preferably 3.5 parts by mass or less, and still more preferably 2.0 parts by mass or less, for each 100 parts by mass of the unvulcanized rubber (a1).

The vulcanizing agent (a5) may be a conventionally known one selected in accordance with the vulcanizing system of the rubber composition for vulcanization. Vulcanization of the unvulcanized rubber (a1) enhances the mechanical strength such as tensile strength of the obtained vulcanized rubber layer and provides the vulcanized rubber layer with fine elasticity.

The vulcanizing system usable in the present invention is any of sulfur vulcanizing system, polyamine vulcanizing system, polyol vulcanizing system, peroxide vulcanizing system, imidazole vulcanizing system, triazine vulcanizing system, oxazole vulcanizing system, and thiazole vulcanizing system. It may be appropriately selected in accordance with the type of a vulcanizable group (cure site) in the case that the unvulcanized rubber contains a cure site, and also in accordance with the properties to be given to the vulcanized laminate and the application thereof.

The vulcanizing agent (a5) may be any of a sulfur vulcanizing agent, a polyamine vulcanizing agent, a polyol vulcanizing agent a peroxide vulcanizing agent, an imidazole vulcanizing agent, a triazine vulcanizing agent, an oxazole vulcanizing agent, and a thiazole vulcanizing agent. Each of these may be used alone, or two or more of these may be used in combination.

In the case that the unvulcanized rubber (a1) is a diene-type fluorine-free rubber (e.g. NBR, SBR, BR), for example, since sulfur vulcanizing system and peroxide vulcanizing system are commonly employed, the vulcanizing agent is preferably at least one agent selected from the group consisting of a sulfur vulcanizing agent and a peroxide vulcanizing agent.

Examples of the sulfur vulcanizing agent include powdered sulfur, precipitated sulfur, colloidal sulfur, surface-treated sulfur, insoluble sulfur, sulfur chloride, sulfur dichloride, a disulfide compound, and a polysulfide compound.

The amount of the sulfur vulcanizing agent is preferably 1.0 to 10.0 parts by mass for each 100 parts by mass of the unvulcanized rubber (a1). If the amount is too small, the adhesion may be insufficient. If the amount is too large, the laminate may be too rigid.

Preferable examples of the peroxide vulcanizing agent include an organic peroxide easily generating peroxide radicals in the presence of heat or a redox system.

Examples of the organic peroxide include 1,1-bis(t-butylperoxy)-3,5,5-trimethylcyclohexane, 2,5-dimethylhexane-2,5-dihydroxyperoxide, di-t-butyl peroxide, t-butyl cumyl peroxide, dicumyl peroxide, α, α'-bis(t-butylperoxy)-p-diisopropyl benzene, 2,5-dimethyl-2,5-di(t-butylperoxy)hexane, 2,5-dimethyl-2,5-di(t-butylperoxy)hexyne-3, benzoyl peroxide, t-butylperoxybenzene, 2,5-dimethyl-2,5-di(benzoylperoxy)hexane, t-butyl peroxymaleic acid, and t-butylperoxy isopropyl carbonate. Preferable among these is a dialkyl compound. Commonly, the type and the amount of the organic peroxide are determined in accordance with the amount of the active -O=O-, the degradation temperature and the like. The amount is commonly 0.1 to 15.0 parts by mass and preferably 0.3 to 5.0 parts by mass for each 100 parts by mass of the unvulcanized rubber.

The vulcanizing agent (a5) is preferably at least one agent selected from the group consisting of a sulfur vulcanizing agent and a peroxide vulcanizing agent, and more preferably a sulfur vulcanizing agent. The amount of the vulcanizing agent (a5) is preferably 0.5 to 5.0 parts by mass and particularly preferably 1.0 to 3.0 parts by mass, for each 100 parts by mass of the unvulcanized rubber (a1).

The metal salt (a6) is preferably at least one kind selected from the group consisting of a metal calbamate and a thiazole metal salt.

Examples of the metal calbamate include zinc dimethyldithiocarbamate (ZnMDC), zinc diethyldithiocarbamate (ZnEDC), zinc dibutyldithiocarbamate (ZnBDC), iron dimethyldithiocarbamate (FeMDC), zinc ethylphenyldithiocarbamate (ZnEPDC), zinc N-pentamethylenedithiocarbamate, zinc dibenzyldithiocarbamate, sodium dimethyldithiocarbamate (NaMDC), sodium diethyldithiocarbamate (NaEDC), sodium dibutyldithiocarbamate (NaBDC), copper dimethyldithiocarbamate (CuMDC), and tellurium diethyldithiocarbamate (TeEDC). Each of these may be used alone, or two or more of these may be used in combination. Among these, ZnMDC, ZnEDC, or ZnBDC is favorably used from the standpoint of adhesiveness and rubber properties.

As the thiazole metal salt, zinc mercaptobenzothiazole (ZnMBT) is favorably used.

The amount of the metal salt (a6) is preferably 0.01 to 3.0 parts by mass, more preferably 0.01 to 0.5 parts by mass, and particularly preferably 0.05 to 0.3 parts by mass, for each 100 parts by mass of the unvulcanized rubber (a1). If the amount is too small, the properties of the vulcanized rubber tend to be deteriorated. If the amount is too large, unvulcanized rubber properties tend to be deteriorated.

The rubber composition for vulcanization contains magnesium oxide (a3). The amount of the magnesium oxide (a3) is preferably 3 to 20 parts by mass and particularly preferably 5 to 15 parts by mass from the standpoint of adhesiveness and rubber properties, for each 100 parts by mass of the unvulcanized rubber (a1). The laminate having a specific structure of the present invention is allowed to have excellent adhesiveness by essentially containing the magnesium oxide (a3).

The rubber composition for vulcanization contains silica (a4). The silica (a4) may be basic silica or acid silica. From the standpoint of adhesiveness, the silica (a4) is preferably basic silica. Examples of the basic silica include Carplex 1120 (product of DSL. Japan Co., Ltd.). From the standpoint of adhesiveness and rubber properties, the amount of the silica (a4) is preferably 10 to 40 parts by mass and particularly preferably 15 to 25 parts by mass, for each 100 parts by mass of the unvulcanized rubber (a1). The laminate having a specific structure of the present invention is allowed to have excellent adhesiveness by essentially containing the silica (a4).

Preferably, the rubber composition for vulcanization does not contain an amine compound as it may inhibit vulcanizing properties and deteriorate rubber properties.

In the present invention, additives commonly used in preparing rubber compositions for vulcanization may be added in accordance with purposes and needs. Examples of the common additives include fillers, processing aids, plasticizers, softeners, age inhibitors, colorants, stabilizers, adhesion aids, mold releasing agents, conductivity imparting agents, thermal conductivity imparting agents, anti-tackifiers for surfaces, tackifiers, flexibility imparting agents, thermal resistance improvers, flame retardants, UV absorbents, oil resistance improvers, foaming agents, antiscorching agents, lubricants, and epoxy resins. Further, one or two or more common vulcanizing agents or vulcanization accelerators other than the above mentioned agents may be added. Here, the amount of these additives should be within the range that would not deteriorate the adhesiveness of the fluororesin layer (B) which is intended to be improved in the present invention.

Examples of the fillers include: metal oxides such as calcium oxide, titanium oxide, and aluminum oxide; metal hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; synthesized hydrotalcite; metal sulfides such as molybdenum disulfide, iron sulfide, and copper sulfide; diatom earth, asbestos, lithopone (zinc sulfide/barium sulfide), graphite, carbon black, carbon fluoride, calcium fluoride, coke, quarts fine powder, zinc flower, talc, mica powder, wollastonite, carbon fiber, aramido fiber, various whiskers, glass fiber, organic stiffeners, and organic fillers.

Examples of the processing aids include: higher fatty acids such as stearic acid, oleic acid, palmitic acid, and lauric acid; higher fatty acid salts such as sodium stearate and zinc stearate; higher fatty acid amides such as stearic amide and oleic amide; higher fatty acid esters such as ethyl oleate; higher fatty amines such as stearylamine and oleylamine; petroleum waxes such as carnauba wax and ceresin wax; polyglycols such as ethylene glycol, glycerin, and diethylene glycol; aliphatic hydrocarbons such as vaseline and paraffin; silicone oils, silicone polymers, low molecular weight polyethylene, phthalate esters, phosphate esters, rosin, (halogenated) dialkyl amines, (halogenated) dialkyl sulfones, and surface active agents.

Examples of the plasticizers include phthalic acid derivatives and sebacic acid derivatives. Examples of the softeners include lubricant oil, process oil, coal tar, castor oil, and calcium stearate. Examples of the age inhibitors include phenylenediamines, phosphates, quinolines, cresols, phenols, and dithiocarbamate metal salts.

Examples of the epoxy resins include bisphenol A-type epoxy resins, bisphenol F-type epoxy resins, and polyfunctional epoxy resins. Among these, the bisphenol A-type epoxy resins are preferable as they are excellent in chemical resistance and adhesiveness. Further, the bisphenol A-type epoxy resin represented by Formula (1): 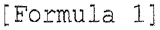 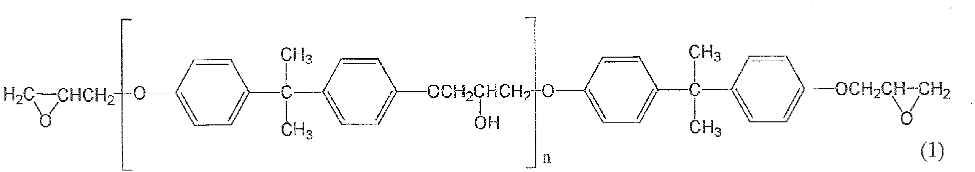 is particularly preferable. In Formula (1), n is the average value and is preferably 0.1 to 3, more preferably 0.1 to 0.5, and still more preferably 0.1 to 0.3. If n is less than 0.1, the adhesiveness with the fluororesin (b) tends to be lowered. If n exceeds 3, the viscosity of the epoxy resin itself increases and such an epoxy resin may be hardly uniformly dispersed in the rubber composition for vulcanization.

In the case that an epoxy resin is added, the amount thereof is preferably not less than 1 part by mass, more preferably not less than 2 parts by mass, and particularly preferably not less than 3 parts by mass, for each 100 parts by mass of the unvulcanized rubber in order to further improve the adhesiveness. From the standpoint of avoiding a too-hard rubber layer, the amount is preferably not more than 25 parts by mass, more preferably not more than 15 parts by mass, and particularly preferably not more than 10 parts by mass, for each 100 parts by mass of the unvulcanized rubber.

In another preferable embodiment of the laminate of the present invention, the compound (a2) is 1,8-diazabicyclo(5.4.0)undec-7-ene formate, and the MFR of the fluoropolymer (b1) is 20 g/10 min or smaller. Because of these components described above, the laminate of the present invention can have further favorable adhesion.

The rubber composition for vulcanization is prepared by compounding the unvulcanized rubber (a1), the compound (a2), the magnesium oxide (a3), and the silica (a4), and if needed, the vulcanizing agent (a5), the metals salt (a6) and other additives.

Compounding may be performed, for exmaple, by using an open roll mixer, banbury mixer, pressure kneader or the like at a temperature of not higher than 100°C.

The laminate of the present invention is produced by lamination of the rubber layer (A) and the fluororesin layer (B). In the laminate of the present invention, the rubber layers (A) may be laminated on both faces of the fluororesin layer (B). Or alternatively, the fluororesin layers (B) may be laminated on both faces of the rubber layer (A).

Lamination of the rubber layer (A) and the fluororesin layer (B) may be carried out by any method such as a method of laminating the rubber layer (A) and the fluororesin layer (B), which have been separately formed, by pressure bonding and the like, a method of laminating the rubber layer (A) and the fluororesin layer (B) by simultaneously forming the both layers, and a method of applying the fluororesin layer (B) composition to the rubber layer (A).

In the method of laminating the rubber layer (A) and the fluororesin layer (B), which have been separately formed, by pressure bonding and the like, different methods may be employed to form layers respectively for the fluoropolymer and the rubber composition for vulcanization.

Formation of the rubber layer (A) may be carried out by shaping the rubber composition for vulcanization into various shapes such as a sheet and a tube by heat compression molding, transfer molding, extrusion, injection, calendering, coating, or the like.

The fluororesin layer (B) may be formed by heat compression molding, melt-extrusion, injection, coating (including powder coating), or the like. Forming may be carried out by using a common forming machine for fluoropolymers such as an injection machine, a blow molding machine, an extrusion machine, and various coating machines. With such a machine, it is possible to produce laminates having various shapes such as a sheet and a tube. Among these methods, melt-extrusion is preferable because of its excellent productivity.

As later described, in the case where another polymer layer (C) is laminated on the fluororesin layer (B), a forming method such as multilayer extrusion, multilayer blow molding, and multilayer injection may be employed to produce multilayer molded products such as multilayer tubes, multilayer hoses, and multilayer tanks.

Examples of the method of laminating the rubber layer (A) and the fluororesin layer (B) by simultaneously forming the both layers include a method of performing forming and laminating at the same time with use of the rubber composition for vulcanization for forming the rubber layer (A) and the fluoropolymer (b1) for forming the fluororesin layer (B) by a method such as multilayer compression molding, multilayer transfer molding, multilayer extrusion, multilayer injection, or doubling. In such a method, the rubber layer (A) as an unvulcanized formed body and the fluororesin layer (B) are laminated. Then, a treatment for firmly adhering the rubber layer (A) and the fluororesin layer (B) is not needed and strong adhesion is advantageously obtained in the subsequent vulcanization step.

The laminate of the present invention may be a laminate of the unvulcanized rubber layer (A) and the fluororesin layer (B). Vulcanization of such an unvulcanized laminate gives strong interlayer adhesiveness.

Namely, the present invention also relates to a vulcanized laminate which is obtained by vulcanizing the unvulcanized laminate of the present invention and in which a vulcanized rubber layer (A1) and the fluororesin layer (B) are adhered by vulcanization, the vulcanized rubber layer (A1) being obtained by vulcanizing the rubber layer (A).

A conventionally known method and conditions may be employed for vulcanizing a rubber composition for vulcanization. Exemplary methods include a method of vulcanizing an unvulcanized laminate over a long period of time and a method in which an unvulcanized laminate is first subjected to a heat treatment as a pretreatment for a comparatively short time (vulcanization being initiated during the pretreatment) and next to the vulcanization treatment over a long period of time. Especially, the method in which an unvulcanized laminate is first subjected to a heat treatment as a pretreatment for a comparatively short time and next to the vulcanization treatment over a long period of time is preferable for the following reasons. Namely, adhesion between the rubber layer (A) and the fluororesin layer (B) is easily obtained in the pretreatment. Further, since vulcanization of the rubber layer (A) starts during the pretreatment and the shape thereof is stabilized, the laminate may be held in various ways during the subsequent vulcanization treatment.

Conditions of the vulcanization treatment are not particularly limited, and common conditions may be employed. Preferably, vulcanization is performed at 130°C to 260°C for 10 minutes to 80 hours by using steam, pressing, an oven, an air bath, infrared rays, microwave, lead sheathing vulcanization, and the like. More preferably, vulcanization is performed at 160°C to 230°C for 20 to 80 hours.

Also, heating conditions during the pretreatment are not particularly limited. Preferably, the pretreatment is performed at 100°C to 170°C for 30 seconds to 1 hour by using steam, pressing, an oven, an air bath, infrared rays, microwave, lead sheathing vulcanization, and the like.

In the vulcanized laminate obtained, the vulcanized rubber layer (A1) and the fluororesin layer (B) are adhered to each other by vulcanization and the interlayer adhesion between them is strong.

The laminates of the present invention (both the unvulcanized laminate and the vulcanized laminate) each may have a two-layer structure having a rubber layer (A and A1 (Hereinafter, the rubber layer (A) is explained as a representative example. However, in the structure of the laminate described below, the vulcanized rubber layer (A1) may be used in place of the rubber layer (A).)) and the fluororesin layer (B), or a three-layer structure having layers of (A)-(B)-(A) or (B)-(A)-(B). Moreover, it may have a multilayer structure having three or more layers in which the rubber layer (A), and the fluororesin layer (B), and a polymer layer (C) other than the rubber layer (A) and the fluororesin layer (B) are adhered to each other.

The polymer layer (C) may be a rubber layer (C1) other than the rubber layer (A), a resin layer (C2) other than the fluororesin layer (B), or a fiber reinforcement layer. In addition, the rubber layer (A) and/or the fluororesin layer (B) may be further laminated by interposing the polymer layer (C).

The rubber layer (C1) is formed of a rubber other than the rubber used in the rubber layer (A) that is directly adhered to the fluororesin layer (B), and the rubber may be a fluororubber or a fluorine-free rubber. Specifically, the previously mentioned examples of the unvulcanized rubber (a1) may be used.

Here, the vulcanizing agent (a5) or other compounding agents may be added also to the unvulcanized rubber composition for forming the rubber layer (C1).

The resin layer (C2) may be formed of a resin having excellent mechanical strength or a resin having low permeability to fuels and gas (hereinafter, also referred to as low-permeable resins). Specific examples of the resin having excellent mechanical strength include fluororesins (other than the fluoropolymer (b1)), polyamide resins, polyolefin resins, vinyl chloride resins, polyurethane resins, polyester resins, polyaramide resins, polyimide resins, polyamideimide resins, polyphenylene oxide resins, polyacetal resins, polycarbonate resins, acrylic resins, styrene resins, acrylonitrile/butadiene/styrene resins (ABS), cellulose resins, polyetheretherketone resins (PEEK), polysulfone resins, polyethersulfone resins (PES), and polyetherimide resins. Specific examples of the resin having low permeability to fuels and gas include resins containing ethylene/vinyl alcohol copolymers, polyphenylene sulfide resins, polybutylene naphthalate resins, polybutylene terephthalate resins, and polyphthalamide (PPA). Among these, polyamide resins are preferable because of their fine formability and adhesiveness. In the case where a laminate is subjected to vulcanization treatment, the melting point of the resin is preferably higher than the temperature of the heat treatment.

Next, the layer structure of the laminate of the present invention is described.

### (1) Two-layer structure including rubber layer (A)-fluororesin layer (B)

This structure is a basic structure. As above described, previously, interlayer adhesion (fluororesin layer-rubber layer) in such a structure is insufficient. Therefore, the additional steps such as a surface treatment on the resin side, additional application of an adhesive between the layers, and fixation by winding a film in a tape form have been conventionally employed, and this has made the procedures complicated. However, according to the present invention, adhesion by vulcanization provides a chemically strong adhesion.

### (2) Three-layer structure including rubber layer-fluororesin layer (B)-rubber layer

This structure may have layers of (A)-(B)-(A) or (A)-(B)-(C1). In the case where sealability is needed, rubber layers are preferably arranged on both sides of the fluororesin layer (B), for example, at a joint part of a fuel pipe or the like for maintaining the sealability. The rubber layers of the outer and inner layers may be the same as or different from each other.

A fuel pipe is allowed to have enhanced chemical resistance and lower fuel permeability by employing the (A)-(B)-(C1) structure in which the rubber layer (A) is a fluorine-free rubber layer, the rubber layer (C1) is a fluororubber layer, and the fluororubber layer (C1) is an inner layer of the pipe.

### (3) Three-layer structure including resin layer-rubber layer (A)-resin layer

This structure may have layers of (B)-(A)-(B) or (B)-(A)-(C2). The rubber layers of the outer and inner layers may be the same as or different from each other.

The resin layers arranged on the both sides stabilize the shape. In addition, such a structure is favorable in the case where the chemical resistance is important. Moreover, in the case where different mechanical properties are required on respective sides, the structure may have layers of (B)-(A)-(C2).

### (4) Three-layer structure including resin layer (C2)-fluororesin layer (B)-rubber layer (A).

### (5) Three layer structure including fluororesin layer (B)-rubber layer (A)-rubber layer (C1)

### (6) Four or more layer structure

Onto the three-layer structures of (2) to (5), an optional rubber layer (A) or (C1), a resin layer (B) or (C2) may be laminated in accordance with the purpose thereof. Further, a layer of a metal foil and the like may be laminated and an adhesive layer may be interposed between the layers except for the rubber layer (A)-fluororesin layer (B) part.

Moreover, a polymer layer (C) may be further laminated to allow a laminate to be a lining.

Here, the thickness, shape and the like of each layer may be appropriately determined in accordance with the purpose and usage patterns.

The laminate of the present invention, especially a vulcanized laminate, has sufficiently low fuel permeability and has excellent thermal resistance, oil resistance, fuel resistance, LLC resistance, and steam resistance. Additionally, such a laminate can withstand applications under severe conditions so as to be applicable in various usages.

For example, the laminate of the present invention is favorably used for seals, bellows, diaphragms, hoses, tubes, and electric cables of gaskets and non-contact and contact type packings (self-seal packing, piston ring, split ring packing, mechanical seal, oil seal, and etc.) which are required to have thermal resistance, oil resistance, fuel resistance, LLC resistance, and steam resistance. They are used for engine body, main engine-driving system, valve gear system, lubricating/cooling system, fuel system, and intake/exhaust system; transmission system of driving gear system; steering system of chassis; braking system; standard electrical parts, electrical parts for control, and accessory electrical parts for automobiles.

Specifically, the laminate of the present invention is usable for the following applications.

In the basic engine, gaskets such as cylinder head gasket, cylinder head covering gaskets, oil pan packing, and general gaskets; seals such as O-rings, packing, and timing belt covering gaskets; hoses such as control hoses; engine mount rubber cushions, and sealing materials for high pressure valves in hydrogen storage systems.

Shaft seals such as crankshaft seal and camshaft seal in the main driving system.

Valve stem seals of engine valves in the valve train system.

Engine oil cooler hoses, oil return hoses, and seal gaskets of engine oil coolers; water hoses around radiators; vacuum pump oil hoses of the vacuum pumps, in the lubrication/cooling system.

Oil seals, diaphragms, and valves of the fuel pumps; fuel hoses such as filler (neck) hoses, fuel supply hoses, fuel return hoses, and vapor (evaporator) hoses; in-tank hoses, filler seals, tank packing, in-tank fuel pump mounting of fuel tanks; tubes and connector O-rings of the fuel line tubes; injector cushion rings, injector seal rings, injector O-rings, pressure regulator diaphragms, and check valves of fuel injectors; needle valves, accelerating pump pistons, flange gaskets, controlling hoses of carburetors; and valve sheets and diaphragms of combined air control (CAC), in the fuel system.

Intake manifold packing and exhaust manifold packing of manifolds; diaphragms, control hoses, and emission control hoses of EGR (Exhaust gas recirculation); diaphragms of BPT; anti-afterburn valve sheets of AB valves; throttle body packing of throttles; turbo oil hoses (supply), turbo oil hoses (return), turbo air hoses, inter cooler hoses, and turbine shaft seals of turbo chargers, in the intake/exhaust system.

Bearing seals, oil seals, O-rings, packing, tor-con hoses related to transmissions system; mission oil hoses, ATF hoses, O-rings, and packing of AT in the transmission system.

Power steering oil hoses in the steering system.

Breather valves, vacuum valves, and diaphragm of master vacs, piston cups (rubber cups) of master cylinders, oil seals, O-rings, packing, brake fluid hoses, caliper seals, and boots, in the braking system.

Insulation bodies and sheaths of electric cables (harness), and tubes of harness exterior parts, of basic electrical components.

Covering materials for various sensor cables in the control electrical components.

O-rings, packing, and cooler hoses of car air conditioners, wiper blades of exterior equipment, as the equipment electrical components.

Suitable applications other than automotive applications include: packing, O-rings, hoses, other sealing materials, diaphragms, valves for achieving oil resistance, chemical resistance, thermal resistance, steam resistance, or weather resistance in transportation system such as marine vessels and aircrafts; similar packing, O-rings, sealing materials, diaphragms, valves, hoses, rolls, tubes, chemical resistant coatings, and linings in chemical plants; similar packing, O-rings, hoses, sealing materials, belts, diaphragms, valves, rolls, and tubes in food plant equipment and food equipment (including household goods); similar packing, O-rings, hoses, sealing materials, diaphragms, valves, and tubes in nuclear plant equipment; similar packing, O-rings, hoses, sealing materials, diaphragms, valves, rolls, tubes, linings, mandrels, electric cables, flexible joints, belts, rubber plates, weather strips, roll blades in PPC copiers, in common industrial goods. For example, backup rubber materials of a PTFE diaphragm has been problematically worn out or torn during use because of its poor slippage. However, the laminate of the present invention can solve such a problem and is favorably used.

In use as rubber sealing materials for food, the conventional rubber sealing materials problematically have aromatizing properties and rubber chips may be immixed in food. However, the laminate of the present invention can solve such problems and is favorably used. A rubber material may have problematically swelled when used as a sealing material for piping that uses a solvent for rubber sealing materials for medical and chemical application. However, use of the laminate of the present invention in which rubber is coated with the resin can solve such a problem. In common industrial field, the laminate of the present invention is favorably used in rubber rolls, 0-rings, packing, sealing materials, and the like, with an aim of enhancing the strength, slippage, chemical resistance, and permeability of the rubber material. Especially, the laminate of the present invention is favorably used in packing of lithium ion battery as it can maintain the chemical resistance and the sealing property at the same time. Additionally, the laminate of the present invention is favorably used in applications requiring the sliding property by low friction.

Fuel pipes made of the laminate of the present invention may be produced by a common method and the method is not particularly limited. The fuel pipes in the present invention include a corrugate tube.

Among these, a fuel pipe made of the above laminate is preferable in terms of the thermal resistance and low fuel permeability.

### EXAMPLES

The present invention is now described with reference to Examples, but is not limited only to these Examples.

Hereinafter, fluororesins used in Examples and Comparative Examples and evaluation methods thereof are described.

### (1) Composition of polymer

The composition was measured by ¹⁹F-NMR analysis.

### (2) Melting point

The melting point was obtained as a temperature corresponding to the maximum value of the melting peaks measured by a SEIKO DSC device (product of Seiko Instruments Inc.) when the temperature was increased at 10°C/min.

### (3) MFR (Melt Flow Rate)

The MFR was obtained with use of a melt indexer (product of TOYO SEIKI SEISAKU-SHO, LTD.) by measuring the weight (g) of the polymer exiting from the nozzle having a diameter of 2 mm and a length of 8 mm per unit time (10 minutes) under a load of 5 kg at 297°C.

Fluororesin sheets used in examples and comparative examples are shown in Table 1 below.

**[Table 1]**

| | Fluoropolymer (mol%) | Melting point (°C) | MFR (g/10 min) (Measurement temperature) | Thickness of fluororesin sheet (µm) |
|---|---|---|---|---|
| Fluororesin sheet (1) | Fluoropolymer (I) TFE/Et/perfluoro(1 ,1 ,5-trihydro-1-pentene) 64.6/33.0/2.4 | 220 | 31.2 (297°C) | 120 |
| Fluororesin sheet (2) | Fluoropolymer (II) TFE/Et/perfluoro(1,1,5-trihydro-1-pentene) 64.5/33.1/2.4 | 219 | 15.8 (297°C) | 120 |
| Fluororesin sheet (3) | Fluoropolymer (III) TFE/Et/perfluoro(1,1,5-trihydro-1-pentene) 55.4/43.1/1.5 | 264 | 14.3 (297°C) | 120 |
| Fluororesin sheet (4) | Fluoropolymer (IV) TFE/Et/perfluoro(1,1,5-trihydro-1-pentene) 55.3/42.6/2.1 | 256 | 6.2 (297°C) | 120 |
| Fluororesin sheet (5) | Fluoropolymer (V) TFE/Et/(perfluorohexyl) ethylene 56.6/42.0/1.4 | 253 | 5.2 (297°C) | 120 |
| Fluororesin sheet (6) | Fluoropolymer (VI) TFE/Et/perfluoro(1,1,5-trihydro-1-pentene) 56.8/41.9/1.2 | 255 | 20.3 (297°C) | 120 |

### (Preparation of rubber composition for vulcanization)

Materials shown in Table 2 below were compounded using a 8-inch open roll mixer to give a sheet (rubber layer A) having about 3 mm thickness formed from a rubber composition for vulcanization A and a sheet (rubber layer B) formed from a rubber composition for vulcanization B.

**[Table 2]**

| Materials | Material name | Manufacturer | Rubber composition for vulcanization A | Rubber composition for vulcanization B |
|---|---|---|---|---|
| Base polymer | Nipol DN101 | Zeon corporation | 100.0 | 100.0 |
| Stearic acid | STEARIC ACID 50S | New Japan Chemical Co., Ltd. | 1.0 | 1.0 |
| MgO | Kyowamag #150 | Kyowa Chemical Industry Co.,Ltd. | 10.0 | 10.0 |
| DBU formate | SA-603 | San-Apro Ltd. | 2.0 | - |
| DBU-benzylchloride salt | DBU-B | Wako Pure Chemical Industries, Ltd. | - | 2.1 |
| DBU naphthoate | DA-500 | DAISO. | - | 1.0 |
| Carbon black | SEAST S | Tokai Carbon Co., Ltd. | 50.0 | 50.0 |
| Silica | CARPLEX 1120 | DSL.Japan Co., Ltd. | 20.0 | 20.0 |
| Plasticizer | TP-95 | Rohm and Haas | 20.0 | 25.0 |
| Sulfur | Sulfur powder | Hosoi Chemical Industry Co., Ltd. | 1.5 | 1.5 |
| Thiazole vulcanization accelerater | NOCCELER MSA-G | Ouchi Shinko Chemical Industrial Co., Ltd. | 1.0 | 1.0 |
| Thiazole metal salt | NOCCELER MZ | Ouchi Shinko Chemical Industrial Co., Ltd. | 0.2 | 0.2 |

### (Examples 1 to 4 and Comparative Examples 1 to 8)

The obtained sheet (about 3 mm thick) of a rubber composition for vulcanization and a fluororesin sheet having a thickness shown in Table 1 were stacked with a fluororesin film (10 µm thick, product of Daikin Industries, ltd., trade name: Polyflon PTFE M731 skive film) having a width of about 10 to 15 mm interposed therebetween on one end portion. The stack was inserted into a die containing a metal spacer so as to make a sheet having a thickness of 2 mm, and was pressed at 160°C for 45 minutes to give a sheet-shaped laminate. The obtained laminate was cut into three sets of strip specimens (10 mm width × 40 mm length) each with a grip that is a part where the fluororesin sheet is peeled. The adhesion strength of the specimens was measured by performing a peeling test at a tensile speed of 50 mm/min. at 25°C using an autograph (product of Shimadzu Corporation, AGS-J 5kN) in accordance with the method disclosed in JIS-K-6256 (Adhesion test of cross-linked rubber). The average value of the obtained data (N=3) was calculated and determined as the adhesion strength. Further, the detachment was observed and evaluated based on the following criteria. Table 3 shows the results.

### (Adhesiveness evaluation)

Good: Material corruption of the rubber composition for vulcanization or the fluororesin occurred on the interface of the laminate to allow no detachment.
Poor: Detachment comparatively easily occurred on the interface of the laminate.

### Example 5

### (Preparation of fluororubber-containing fluororesin sheet (fluororesin sheet (7)))

A fluoropolymer (I) (TFE/Et/perfluoro(1,1,5-trihydro-1-pentene) = 64.6/33.0/2.4) and a fluororubber full compound were compounded with a Labo plasto mill (product of Toyo Seiki Co,. Ltd.). (The fluororubber full compound herein was obtained by compounding 100 parts by mass of a fluororubber precompound and 3 parts by mass of MgO at 25°C to 70°C with a mixing roll equipped with two 8-inch rolls by a conventional method. The fluororubber precompound herein was obtained by compounding 100 parts by mass of a polyol-cross-linkable ternary fluororubber (VdF/TFE/HFP = 50/20/30 mol%) and 3 parts by mass of GP21 (a melt mixture of bisphenol AF and BTPPC (mass ratio 2:1)) at 100°C with a pressure kneader.) The amounts of the fluoropolymer (I) and the fluororubber full compound were adjusted so that the total volume thereof was 77% by volume of the total capacity of the compounding unit of the Labo plasto mill. The temperature of the Labo plasto mill was set to 260°C, which is a temperature 40°C higher than the temperature of the melting point (220°C) of the fluoropolymer (I). After the temperature of the Labo plasto mill became stable, the fluoropolymer (I) and the fluororubber full compound were added to the mill at the mass ratio of 70/30. Immediately after adding, the stirring rate was raised to 80 rpm. Stirring was stopped ten minutes after the torque reached the maximum value (corresponding to T90 of a curelastmeter type II). Thereby, a dynamically cross-linked composition of the fluoropolymer (I) and the fluororubber full compound was obtained. Also, a sheet (fluororubber-containing fluororesin sheet (7)) having a thickness of 0.5 mm was produced by heat pressing the composition.

The obtained fluororesin sheet (7) was stacked with a rubber composition sheet for vulcanization having a thickness of about 3 mm to provide a sheet-shaped laminate in the same method as in Example 1. Also, a test specimen was prepared in the same method as in Example 1 using the laminate. The adhesive strength was measured using the test spesimen, and adhesiveness evaluation was performed. Table 3 shows the results.

**[Table 3]**

| | Rubber composition for vulcanization | Fluororesin sheet | Adhesion strength (N/cm) | Adhesion evaluation |
|---|---|---|---|---|
| Example 1 | A | (1) | 26 | Good |
| Example 2 | A | (2) | 34 | Good |
| Example 3 | B | (1) | 27 | Good |
| Example 4 | B | (2) | 16 | Good |
| Example 5 | A | (7) | 69 | Good |
| Comparative Example 1 | A | (3) | 2 | Poor |
| Comparative Example 2 | A | (4) | 3 | Poor |
| Comparative Example 3 | A | (5) | 1 or less | Poor |
| Comparative Example 4 | A | (6) | 3 | Poor |
| Comparative Example 5 | B | (3) | 1 or less | Poor |
| Comparative Example 6 | B | (4) | 1 or less | Poor |
| Comparative Example 7 | B | (5) | 1 or less | Poor |
| Comparative Example 8 | B | (6) | 1 or less | Poor |

### INDUSTRIAL APPLICABILITY

The laminate of the present invention, especially the vulcanized laminate, in which the rubber layer and the fluororesin layer with excellent thermal resistance are firmly adhered each other, is excellent in thermal resistance, oil resistance, fuel resistance, LLC resistance, and steam resistance as well as chemical resistance. Thereby, the laminate of the present invention, especially the vulcanized laminate, is favorably used for seals, bellows, diaphragms, hoses, tubes, and electric cables of gaskets and non-contact and contact type packings (self-seal packing, piston ring, split ring packing, mechanical seal, oil seal, and etc.) which are required to have thermal resistance, oil resistance, fuel resistance, LLC resistance, and steam resistance. They are used for engine body, main engine-driving system, valve gear system, lubricating/cooling system, fuel system, and intake/exhaust system; transmission system of driving gear system; steering system of chassis; braking system; standard electrical parts, electrical parts for control, and accessory electrical parts for automobiles.

## Claims

1. A laminate comprising,
(1) a rubber layer (A) formed of a rubber composition for vulcanization containing
(a1) an unvulcanized rubber;
(a2) more than 1.0 to 5.0 pbw, per 100 pbw of the unvulcanized rubber (a1), of at least one compound selected from 1,8-diazabicyclo(5.4.0)undec-7-ene salts, 1,5-diazabicyclo(4.3.0)-non-5-ene salts, 1,8-diazabicyclo(5.4.0)undec-7-ene, and 1,5-diazabicyclo(4.3.0)-non-5-ene;
(a3) magnesium oxide; and
(a4) silica; and
(2) on the rubber layer (A), a fluororesin layer (B) formed of a fluoropolymer composition containing a fluoropolymer (b1) which
- has a melting point of ≥ 200°C,
- has polymer units derived from ethylene and polymer units derived from tetrafluoroethylene (TFE), and
contains ≥ 60 mol%, based on the total of the polymer units, of polymer units derived from TFE.

2. The laminate of claim 1, wherein the rubber composition for vulcanization further contains at least one vulcanizing agent (a5) selected from sulfur vulcanizing agents and peroxide vulcanizing agents.

3. The laminate of claim 1 or 2, wherein the rubber composition for vulcanization further contains at least one metal salt (a6) selected from metal carbamates and thiazole metal salts.

4. The laminate of any of claims 1-3, wherein the unvulcanized rubber (a1) is a fluorine-free rubber.

5. The laminate of any of claims 1-4, wherein the unvulcanized rubber (a1) is acrylonitrile-butadiene rubber.

6. The laminate of any of claims 1-5, wherein the compound (a2) is at least one compound selected from 1,8-diazabicyclo(5.4.0)undec-7-ene, 8-benzyl-1,8-diazabicyclo(5.4.0)-7-undecenium chloride, 1,8-diazabicyclo(5.4.0)undec-7-ene naphthoate, 1,8-diazabicyclo(5.4.0)undec-7-ene phenoxide, 1,8-diazabicyclo(5.4.0)undec-7-ene orthophthalate, and 1,8-diazabicyclo(5.4.0)undec-7-ene formate.

7. The laminate of any of claims 1-6, wherein
the fluoropolymer (b1) is a copolymer containing polymer units derived from ethylene, polymer units derived from TFE, and polymer units derived from a fluorine-containing vinyl monomer (e) of the formula CH₂=CF-(CF₂)ₙ-X², wherein X² is H or F; and n is an integer of 1-10, and
the total of polymer units derived from ethylene and polymer units derived from TFE, based on the total of the polymer units, is 90-99.9 mol%.

8. The laminate of any of claims 1-7, wherein rubber layers (A) are laminated on both faces of the fluororesin layer (B).

9. The laminate of any of claims 1-7, wherein fluororesin layers (B) are laminated on both faces of the rubber layer (A).

10. The laminate of any of claims 1-9, further comprising a polymer layer (C) other than the rubber layer (A) and the fluororesin layer (B), on the rubber layer (A) or the fluororesin layer (B).

11. A laminate obtained by vulcanizing the laminate of any of claims 1-10, wherein a vulcanized rubber layer (A1) obtained by vulcanizing the rubber layer (A) and the fluororesin layer (B) are adhered by vulcanization.

## Patentansprüche

1. Laminat, umfassend
(1) eine Kautschukschicht (A), die aus einer Kautschukzusammensetzung zur Vulkanisierung gebildet ist, enthaltend
(a1) einen unvulkanisierten Kautschuk
(a2) pro 100 Gewichtsteile des unvulkanisierten Kautschuks mehr als 1,0 bis 5,0 Gewichtsteile mindestens einer Verbindung, ausgewählt aus 1,8-Diazabicyclo(5.4.0)undec-7-en-Salzen, 1,5-Diazabicyclo(4.3.0)-non-5-en-Salzen, 1,8-Diazabicyclo(5.4.0)undec-7-en und 1,5-Diazabicyclo(4.3.0)-non-5-en;
(a3) Magnesiumoxid; und
(a4) Silica; und
(2) auf der Kautschukschicht (A) eine Fluorharzschicht (B), die aus einer Fluorpolymerzusammensetzung gebildet ist, welche ein Fluorpolymer (b1) enthält, das
- einen Schmelzpunkt von ≥ 200°C aufweist,
- von Ethylen abgeleitete Polymereinheiten und von Tetrafluorethylen (TFE) abgeleitete Polymereinheiten aufweist, und
basierend auf der Gesamtmenge der Polymereinheiten ≥ 60 mol% von TFE abgeleitete Polymereinheiten enthält.

2. Laminat gemäß Anspruch 1, worin die Kautschukzusammensetzung zur Vulkanisierung ferner mindestens ein Vulkanisierungsmittel (a5) enthält, ausgewählt aus Schwefel-Vulkanisierungsmitteln und Peroxid-Vulkanisierungsmitteln.

3. Laminat gemäß Anspruch 1 oder 2, worin die Kautschukzusammensetzung zur Vulkanisierung ferner mindestens ein Metallsalz (a6) enthält, ausgewählt aus Metallcarbamaten und Thiazolmetallsalzen.

4. Laminat gemäß mindestens einem der Ansprüche 1-3, worin der unvulkanisierte Kautschuk (a1) ein fluorfreier Kautschuk ist.

5. Laminat gemäß mindestens einem der Ansprüche 1-4, worin der unvulkanisierte Kautschuk (a1) ein AcrylnitrilButadien-Kautschuk ist.

6. Laminat gemäß mindestens einem der Ansprüche 1-5, worin die Verbindung (a2) mindestens eine Verbindung ist, ausgewählt aus 1,8-Diazabicyclo(5.4.0)undec-7-en, 8-Benzyl-1,8-diazabicyclo(5.4.0)-7-undeceniumchlorid, 1,8-Diazabicyclo(5.4.0)undec-7-en-naphthoat, 1,8-Diazabicyclo(5.4.0)undec-7-en-phenoxid, 1,8-Diazabicyclo(5.4.0)undec-7-en-orthophthalate und 1,8-Diazabicyclo(5.4.0)undec-7-en-formiat.

7. Laminat gemäß mindestens einem der Ansprüche 1-6, worin das Fluorpolymer (b1) ein Copolymer ist, das von Ethylen abgeleitete Polymereinheiten, von TFE abgeleitete Polymereinheiten und Polymereinheiten enthält, die von einem fluorhaltigen Vinylmonolmer (e) der Formel CH₂=CF-(CF₂)ₙ-X² abgeleitet sind, worin X² H oder F ist; und n eine ganze Zahl von 1-10 ist, und
die Gesamtmenge der von Ethylen abgeleiteten Polymereinheiten und der von TFE abgeleiteten Polymereinheiten basierend aus der Gesamtmenge der Polymereinheiten 90-99,9 mol% beträgt.

8. Laminat gemäß mindestens einem der Ansprüche 1-7, worin die Kautschukschichten (A) auf beide Seiten der Fluorharzschicht (B) laminiert sind.

9. Laminat gemäß mindestens einem der Ansprüche 1-7, worin die Fluorharzschichten (B) auf beide Seiten der Kautschukschicht (A) laminiert sind.

10. Laminat gemäß mindestens einem der Ansprüche 1-9, ferner umfassend auf der Kautschukschicht (A) oder der Fluorharzschicht (B) eine Polymerschicht (C), die sich von der Kautschukschicht (A) und der Fluorharzschicht (B) unterscheidet.

11. Laminat, erhalten durch Vulkanisieren des Laminats gemäß mindestens einem der Ansprüche 1-10, worin eine durch Vulkanisieren der Kautschukschicht (A) vulkanisierte Kautschukschicht (A1) und die Fluorharzschicht (B) mittels Vulkanisierung geklebt sind.

## Revendications

1. Stratifié comprenant :
(1) une couche de caoutchouc (A) formée d'une composition de caoutchouc pour vulcanisation contenant :
(a1) un caoutchouc non vulcanisé ;
(a2) plus de 1,0 à 5,0 parties en poids, pour 100 parties en poids du caoutchouc non vulcanisé (a1), d'au moins un composé choisi parmi
des sels de 1,8-diazabicyclo(5,4,0)undéc-7-ène,
des sels de 1,5-diazabicyclo(4,3,0)-non-5-ène,
le 1,8-diazabicyclo(5,4,0)undéc-7-ène, et
le 1,5-diazabicyclo(4,3,0)-non-5-ène ;
(a3) de l'oxyde de magnésium ; et
(a4) de la silice ; et
(2) sur la couche de caoutchouc (A), une couche de résine fluorée (B) formée d'une composition de fluoropolymère contenant un polymère fluoré (b1) ayant :
- un point de fusion ≥ 200°C,
- des unités polymères dérivées d'éthylène et des unités polymères dérivées de tétrafluoroéthylène (TFE), et
- contient ≥ 60 % en mole, par rapport au total des unités polymères, d'unités polymères dérivées de TFE.

2. Stratifié selon la revendication 1, dans lequel la composition de caoutchouc pour vulcanisation contient en outre au moins un agent de vulcanisation (a5) choisi parmi des agents de vulcanisation au soufre et des agents de vulcanisation au peroxyde.

3. Stratifié selon la revendication 1 ou 2, dans lequel la composition de caoutchouc pour vulcanisation contient en outre au moins un sel métallique (a6) choisi parmi des carbamates métalliques et des sels métalliques de thiazole.

4. Stratifié selon l'une quelconque des revendications 1 à 3, dans lequel le caoutchouc non vulcanisé (a1) est un caoutchouc sans fluor.

5. Stratifié selon l'une quelconque des revendications 1 à 4, dans lequel le caoutchouc non vulcanisé (a1) est un caoutchouc d'acrylonitrile-butadiène.

6. Stratifié selon l'une quelconque des revendications 1 à 5, dans lequel le composé (a2) est au moins un composé choisi parmi
le 1,8-diazabicyclo(5,4,0)undéc-7-ène,
le chlorure de 8-benzyl-1,8-diazabicyclo(5,4,0)-7-undécénium,
le naphtoate de 1,8-diazabicyclo(5,4,0)undéc-7-ène,
le phénoxyde de 1,8-diazabicyclo(5,4,0)undéc-7-ène,
l'orthophtalate de 1,8-diazabicyclo(5,4,0)undéc-7-ène, et
le formate de 1,8-diazabicyclo(5,4,0)undéc-7-ène.

7. Stratifié selon l'une quelconque des revendications 1 à 6, dans lequel
le polymère fluoré (b1) est un copolymère contenant des unités polymères dérivées d'éthylène, des unités polymères dérivées de TFE et des unités polymères dérivées d'un monomère vinylique contenant du fluor (e) de formule CH₂=CF-(CF₂)ₙ-X² dans laquelle X² représente H ou F ; et n est un nombre entier compris entre 1 et 10, et
le total d'unités polymères dérivées d'éthylène et des unités polymères dérivées de TFE, sur la base du total des unités polymères, est de 90-99,9 % en mole.

8. Stratifié selon l'une quelconque des revendications 1 à 7, dans lequel des couches de caoutchouc (A) sont stratifiées sur les deux faces de la couche de résine fluorée (B).

9. Stratifié selon l'une quelconque des revendications 1 à 7, dans lequel des couches de résine fluorée (B) sont stratifiées sur les deux faces de la couche de caoutchouc (A).

10. Stratifié selon l'une quelconque des revendications 1 à 9, comprenant en outre une couche de polymère (C) autre que la couche de caoutchouc (A) et la couche de résine fluorée (B), sur la couche de caoutchouc (A) ou la couche de résine fluorée (B).

11. Stratifié obtenu par vulcanisation du stratifié selon l'une quelconque des revendications 1 à 10, dans lequel une couche de caoutchouc vulcanisé (A1) obtenue en vulcanisant la couche de caoutchouc (A) et la couche de résine fluorée (B) sont collées par vulcanisation.
